# EUROPEAN PATENT SPECIFICATION

(11) **EP 1 058 911 B1**
(45) Date of publication and mention of the grant of the patent: **27.11.2002**
(21) Application number: 99938006.6
(22) Date of filing: 01.03.1999
(51) Int. Cl.: G06K 19/07, G06K 7/00, G06K 1/12

(54) **ELECTRONIC TAG**
ELEKTRONISCHES ETIKETT
ETIQUETTE ELECTRONIQUE

(30) Priority: 02.03.1998 ZA 9801719
(43) Date of publication of application: 13.12.2000
(73) Proprietor: Konisa Limited, Douglas, Isle of Man IM1 1JA (GB)
(72) Inventor: ASHWIN, Terrence Keith, Randpark Ridge 2156 (ZA)
(74) Representative: Baverstock, Michael George Douglas
(86) International application number: GB9900610
(87) International publication number: WO99045500

(56) References cited:
- EP-A- 0 525 642
- DE-A- 4 138 131
- US-A- 4 416 283
- US-A- 4 952 913
- US-A- 4 984 295
- US-A- 5 430 441
- US-A- 5 433 736

## Description

THIS INVENTION relates to an identification device. It relates in particular to an electronic tag and to a method of feeding data into an electronic tag. It also relates to an electronic tag programming installation.

Electronic tags, e.g. including transponder devices and the like, are commonly available in the market place. In order to feed or program information into such tags, hardwired connections are typically used. In other devices, e.g. DE-A-41 38 131 (PROVERA GES FUER PROJEKTIERUNG) complex capacitive/optical, capacitive/inductive, or the like circuitry is used to enter data into a credit card-type tag. In US 4 952 913 A (PAULEY JAMES D *et al*) a tag for monitoring movement of an individual is disclosed. A reed switch is provided merely to switch the tag into a different mode of operation. In US-A-5 430 441 (BICKLEY ROBERT H *et al*) an inductive pickup coil is provided to program a response code into the tag. It is believed that such configurations are not highly power efficient and thus not generally included in active tags. Further, detection circuitry is required to detect activation of the inductive pickup thereby further increasing power consumption and the component count. Likewise, EP-A-0 525 642 (NTT DATA TSUSHIN KK) discloses an IC card with a coil 11. In this device the component count is further increased by rectifier smoothing and a receiver. It is an object of this invention to offer a relatively simple electronic tag which provided enhanced flexibility in the manner in which data may be fed into the tag.

According to the invention, there is provided an electronic tag which includes magnetic sensing means which is operable to sense a change in a magnetic field in order to program the tag.

Typically, the electronic tag includes
microprocessor based circuitry including storage means, the microprocessor based circuitry being programmable in response to activation of the magnetic sensing means; and
transmitter means connected to the microprocessor based circuitry and operable selectively to transmit data sourced from the microprocessor based circuitry.

The microprocessor based circuitry may include a microcontroller which has one of its input ports connected to a contact of the magnetic sensing means for feeding data into the microcontroller.

The microcontroller is typically programmed to monitor the sensing means and, dependent upon the nature of activation or switching of the sensing means, enter into at least one different mode of operation e.g. a programming mode, data input mode, or the like.

The microcontroller may be programmed to sense a predetermined number of times the sensing means is activated and enter into the different mode of operation in response thereto. In certain embodiments the microcontroller monitors a time duration between successive activation of the sensing means and, dependent upon the time duration, enters into at least one different mode of operation.

The microcontroller may selectively enter into a programming mode in which binary data is defined in the microcontroller dependent upon the nature of activation of the sensing means. For example, once the microcontroller chip is switched into its programming mode, it may be arranged to enter into a data input mode in which data is input into its storage means via the sensing means.

The microcontroller may be configured so that data for a plurality of data fields is defined by activation of the sensing means. The microcontroller may be arranged so that, when a predetermined time delay in activation of the sensing means has occurred, a subsequent data field is then addressed.

The microcontroller may upon activation of the sensing means in a predetermined manner enter into a monitoring mode of operation in which the tag performs a monitoring function.

The sensing means may thus be multi-purpose in that it may switch the microprocessor based circuitry into a program mode and also function in a data input mode. Once the tag has been programmed, the sensing means may perform a monitoring function, e.g. monitoring opening and closing of a door in response to displacement of a permanent magnet in its proximity, function as a magnetic counter, or the like.

In other embodiments, the tag is programmed with unique identification data identifying the object or person to which it is attached in use, e.g. a person's name, the contents of a container, and so on.

The transmitter means may be a radio frequency transmitter arranged intermittently to transmit encoded digital data, e.g. in a conventional fashion, to reading apparatus.

In certain embodiments, the magnetic sensing means is a reed switch which is selectively switched by an external magnetic field. The microcontroller may be a conventional integrated circuit with an input port connected to the reed switch. The other contact of the reed switch may be pulled high by a resistor. The resistor typically has a high value in order to reduce the current flowing through the reed switch and thereby increase power consumption efficiency of the tag.

Instead, the magnetic sensing means may be a device designed to operate on the Hall effect.

The electronic tag may include an encapsulation of a resinous material.

The electronic tag may be an active tag including its own power source, e.g. a long-life lithium battery.

Further in accordance with the invention, there is provided a method of feeding data into an electronic tag including microprocessor based circuitry connected to magnetic sensing means, the method including
selectively providing a magnetic field in proximity to the magnetic sensing means; and
automatically monitoring the magnetic sensing means by means of the microprocessor based circuitry and programming the microprocessor based circuitry of the electronic tag in response to changes in the magnetic field.

The electronic tag may be programmed manually by physically displacing a permanent magnet in proximity to the magnetic sensing means. However, in other embodiments, the electronic tag is programmed automatically by energising an electromagnetic field selectively activated by a programming installation.

Still further there is provided an electronic tag programming installation for programming an' electronic tag including magnetic sensing means, the installation including
magnetic field generating means proximate which the electronic tag is positioned in use;
data input means for receiving data which is to be programmed into the tag; and
control means responsive to the data input means and connected to the magnetic field generating means, the control means being operable selectively to activate the magnetic field generating means to activate magnetic sensing means of the tag and thereby program the tag.

The control means may be defined by a personal computer.

The invention is now described, by way of example, with reference to the accompanying diagrammatic drawings.

In the drawings,
Figure 1 shows a schematic block diagram of an electronic tag in accordance with the invention; and
Figure 2 shows a schematic block diagram of an electronic tag programming installation, also in accordance with the invention.

Referring to the drawings, reference numeral 10 generally indicates an electronic tag in accordance with the invention. The tag 10 includes a transmitter 12, a microcontroller chip 14, a long-life lithium battery 16, and magnetic sensing means in the form of a reed switch 18. As will be described in more detail below, the reed switch 18 performs multiple functions and may be used to switch the microcontroller chip 14 into a program mode as well as enter data into onboard storage means or memory 20.

The lithium battery 16 is connected via lines 22 to the transmitter 12 and to the microcontroller chip 14. Further, the battery 16 is connected via a resistor 24 to a contact of the reed switch 18, the other contact of the reed switch 18 being connected via line 26 to an input port of the microcontroller chip 14. The value of the resistor 24 is of a high magnitude thereby to limit the current selectively flowing through the reed switch 18 and thereby enhance power consumption efficiency of the electronic tag 10. The microcotroller chip 14 is connected to the transmitter 12 via a bi-directional link 28.

The microcontroller chip 14 is programmed to include a counter facility 30 selectively to count each time contacts of the reed switch 18 are closed. In order selectively to close the contacts of the reed switch 18, a permanent magnet 32, for example, is intermittently displaced in the direction of arrow 34 thereby intermittently and selectively to toggle the reed switch 18. In response to the initial toggling of the reed switch 18, the microcontroller chip 14 enters into a program mode in which unique identification data associated with an object to which the electronic tag 10 is to be attached, is fed into the memory 20. In order to facilitate programming of the tag 10, its present mode of operation and data included in various programmable data fields is transmitted via the transmitter 12, and as shown by arrow 36, to reading apparatus 38 which has an LCD screen 40 to display the information.

The microcontroller chip 14 includes a pre-programmed software routine to monitor switching of the reed switch 18 and is arranged so that, dependent upon the number of times the reed switch 18 is toggled as well as the time duration between subsequent toggling of the reed switch 18, it enters various different modes as displayed by the LCD screen 40 of the reading apparatus 38. For example, if the preprogrammed software recognises that reed switch 18 has been switched in such a fashion instructing it to go into a program mode, subsequent toggling or switching may then represent data to be fed into the microcontroller chip 14. Upon recognition of a further predetermined code or sequence of switching of the reed switch 18, the mircocontroller chip 14 may then exit the program mode.

Once the selected information has been programmed into the tag 10, the reed switch 18 may perform a monitoring function operable to monitor changes in the magnetic field and, in response thereto, increment the counter of the counter facility 30. Accordingly, in certain applications of the invention, the tag 10 may be used to monitor the opening and closing of doors, windows, or the like.

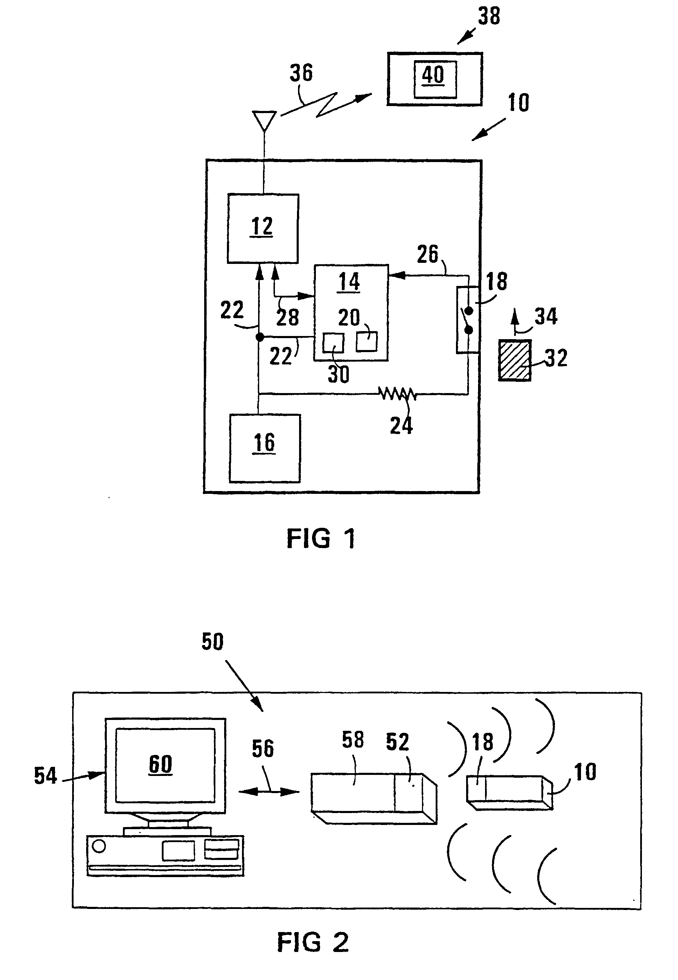

Referring in particular to Figure 2 of the drawings, reference numeral 50 generally indicates an electronic tag programming installation for programming the electronic tag 10 as hereinbefore described. The installation 50 includes magnetic field generating means in the form of an electromagnet 52 and data input means and control means defined by a personal computer (PC) 54. The PC 54 is connected to the electromagnet 52 and to a reading apparatus 58 via a bidirectional communication link 56.

In use, data to be programmed into the electronic tag 10 is fed into the PC 54 which then selectively energises the electromagnet 52 thereby to activate or switch the reed switch 18 of the tag 10 selectively and thereby program the tag 10. In order to monitor the internal mode of the microcontroller chip 14, the tag 10 intermittently transmits a digitally encoded data signal to the reading apparatus 58 and comprehensive details are then displayed on a screen 60 of the PC 54.

The Inventor believes that the invention, as illustrated, provides a relatively simpler electronic tag 10 which may be used in various different applications. The Inventor believes that it is an advantage of the invention that the electronic tag 10 may be programmed in a wireless fashion by switching the reed switch 18 thereby simplifying hardware requirements in order to program the electronic tag 10. As the reed switch 18 is directly connected to the input/output port of the microcontroller chip 14, power drawn by the sensing means and thus required by the tag 10 is greatly reduced. The low component' count of the sensing means enhances the battery life of the active tag 10. Further unlike conventional tags, such as those disclosed for example in EP-A-0 525 642 (NTT DATA TSUSHIN KK), by using the inventive reed switch 18 and microcontroller chip 14 arrangement, no complex input circuitry is required. Thus, the tag 10 in accordance with the invention does not require rectifier smoothing, a receiver circuit or the like and a coil to enter data into the tag 10.

It is believed that a further advantage of the tag 10, in accordance with the invention, is that the sensing means in the form of the reed switch 18 performs multiple functions. For example, it may function as a sensor or monitor to monitor tampering in combination with a permanent magnet. Further, it may function as a sensor in response to which the microcontroller chip 14 may enter into a different mode of operation, e.g. a programmable mode. When the microcontroller chip 14 is in its programmable mode of operation, the reed switch 18 is used to define binary data which is fed into the microcontroller chip 14. It is thus believed that the tag 10 provides greater operational flexibility with a relatively simple design.

## Claims

1. An electronic tag (10) which includes
a magnetically activateable switch (18);
microprocessor based circuitry (14) including storage means (20) and at least one data port, the data port being connected to the switch (18); and
transmitter means (12) connected to the microprocessor based circuitry (14) and operable selectively to transmit data sourced from the microprocessor based circuitry (14), with the microprocessor based circuitry (14) being **characterised in that** upon selective activation of the switch (18) it enters a programmable mode of operation in which the microprocessor based circuitry (14) is configured to receive data defined by subsequent activation of the switch (18).

2. An electronic tag (10) as claimed in Claim 1, **characterised in that** the microprocessor based circuitry (14) is a microcontroller programmed to sense a predetermined number of times the switch (18) is activated and enter into its programmable mode of operation in response thereto.

3. An electronic tag (10) as claimed in Claim 1 or Claim 2, **characterised in that** the microprocessor based circuitry (14) monitors a time duration between successive activation of the switch (18) and, dependent upon the time duration, enters into at least one different mode of operation.

4. An electronic tag (10) as claimed in Claim 3, **characterised in that** the microprocessor based circuitry (14) is configured so that data from a plurality of data fields is defined by activation of the switch (18), the microprocessor based circuitry (14) being arranged so that, when a predetermined time delay in activation of the switch (18) has occurred, a subsequent data field is then addressed.

5. An electronic tag (10) as claimed in any one of the preceding claims, **characterised in that** binary data is defined by selective activation of the switch (18) when in the programmable mode of operation.

6. An electronic tag (10) as claimed in any of the preceding claims, **characterised in that** the microprocessor based circuitry (14) upon activation of the switch (18) in a predetermined manner enters into a monitoring mode of operation in which the tag (10) performs a monitoring function.

7. An electronic tag (10) as claimed in any of the preceding claims, **characterised in that** the transmitter means (12) is a radio frequency transmitter arranged intermittently to transmit coded digital data to reading apparatus (38).

8. An electronic tag (10) as claimed in any of the preceding claims, **characterised in that** it is an active tag including its own power source (16) and is sealingly encapsulated in a body of resinous material.

9. A method of feeding data into an electronic tag (10) including microprocessor based circuitry (14) connected to a magnetically activateable switch (18), the method **characterised in that** it includes
selectively providing a magnetic field in proximity to the switch (18); and
monitoring activation of the switch (18) by the microprocessor based circuitry (14) and in response to activation thereof, entering into a programmable mode of operation in which the microprocessor based circuitry (14) receives data defined by activation of the reed switch (18).

10. A method as claimed in Claim 9, **characterised in that** the tag (10) is operable to enter into a monitoring mode of operation in which the tag (10) performs a monitoring function.

## Patentansprüche

1. Ein elektronisches Identifizierungskennzeichen (10) das einen magnetisch aktivierbaren Schalter (18) einschließt; eine Mikroprozessorschaltung (14), einschließlich der Speichermöglichkeiten (20) und mindestens einem Datenanschluß, der mit dem Schalter (18) verbunden ist; ein Sender (12) der mit der Mikroprozessorschaltung (14) verbunden ist und selektiv betätigt werden kann um Daten aus der Mikroprozessorschaltung (14) zu senden, indem die Mikroprozessorschaltung (14) **dadurch gekennzeichnet ist, daß** bei selektiver Aktivierung des Schalters (18) die Schaltung in einen programmierbaren Betriebsmodus fährt in dem die Mikroprozessorschaltung (14) so konfiguriert wird, daß sie Daten empfangen kann, die durch die darauffolgende Aktivierung des Schalters (18) definiert werden.

2. Ein elektronisches Identifizierungskennzeichen (10) wie in Patentanspruch 1 beschrieben, **dadurch gekennzeichnet, daß** die Mikroprozessorschaltung (14) durch eine Mikrosteuereinheit programmiert wird um eine vorgegebene Anzahl von Schalterbetätigungen (18) zu messen und daraufhin in seinen programmierbaren Modus zu fahren.

3. Ein elektronisches Identifizierungskennzeichen (10) wie in Patentanspruch 1 oder 2 beschrieben, **dadurch gekennzeichnet, daß** die Mikroprozessorschaltung (14) die Zeit zwischen aufeinanderfolgenden Aktivierungen des Schalters (18) überwacht und, je nach der Zeitspanne, in mindestens einen anderen Betriebsmodus fährt.

4. Ein elektronisches Identifizierungskennzeichen (10) wie in Patentanspruch 3 beschrieben, **dadurch gekennzeichnet, daß** die Mikroprozessorschaltung (14) so konfiguriert ist, daß Daten aus einer Vielzahl von Datenfeldern durch Aktivierung des Schalters (18) definiert wird, und daß die Mikroprozessorschaltung (14) so angeordnet ist, daß nach einer vorgegebenen Zeitverzögerung in der Aktivierung des Schalters (18) das darauffolgende Datenfeld angesprochen wird.

5. Ein elektronisches Identifizierungskennzeichen (10) wie in einem der vorgehenden Patentansprüche beschrieben, **dadurch gekennzeichnet, daß** Binärdaten im programmierbaren Betriebsmodus durch selektive Aktivierung des Schalters (18) definiert werden.

6. Ein elektronisches Identifizierungskennzeichen (10) wie in einem der vorgehenden Patentansprüche beschrieben, **dadurch gekennzeichnet, daß** die Mikroprozessorschaltung (14) bei Aktivierung des Schalters (18) auf eine vorgegebene Art, in einen Überwachungsbetriebsmodus fährt in dem das Identifizierungskennzeichen (10) eine Überwachungsfunktion erfüllt.

7. Ein elektronisches Identifizierungskennzeichen (10) wie in einem der vorgehenden Patentansprüche beschrieben, **dadurch gekennzeichnet, daß** der Sender (12) ein Radiofrequenzsender ist, der so angeordnet ist, daß er intermittierend kodierte digitale Daten an ein Lesegerät sendet (38).

8. Ein elektronisches Identifizierungskennzeichen (10) wie in einem der vorgehenden Patentansprüche beschrieben, **dadurch gekennzeichnet, daß** es ein aktives Identifizierungskennzeichen ist, das über seine eigene Spannungsquelle (16) verfügt und versiegelt in einem harzähnlichen Körper verkapselt ist.

9. Eine Methode, Daten in ein elektronisches Identifizierungskennzeichen (10) einzuspeisen, das eine Mikroprozessorschaltung (14) einschließt, die an einen magnetisch aktivierbaren Schalter (18) angeschlossen ist, indem die Methode **dadurch gekennzeichnet** wird, daß sie die selektive Darstellung eines magnetischen Feldes in der Umgebung des Schalters (18) einschließt, und die Aktivierung des Schalters (18) durch die Mikroprozessorschaltung (14) überwacht und daraufhin in einem programmierbaren Betriebsmodus fährt in dem die Mikroprozessorschaltung (14) Daten empfängt die durch die Aktivierung des Blattfederschalters (18) definiert werden.

10. Eine Methode wie in Patentanspruch 9 beschrieben, **dadurch gekennzeichnet, daß** das Identifizierungskennzeichen (10) in einen Überwachungsbetriebsmodus fahren kann, in dem das Identifizierungskennzeichen (10) eine Überwachungsfunktion durchführt.

## Revendications

1. Une carte électronique (10) comportant un interrupteur à commande magnétique (18) ; un circuit fonctionnant à base de microprocesseurs (14) comportant des moyens de stockage (20) et au moins une prise d'entrée de données, la prise étant connectée à l'interrupteur (18) ; et des moyens de transmission (12), connectés au circuit de microprocesseurs (14) et pouvant être mis en oeuvre de manière sélective pour transmettre les données extraites du circuit de microprocesseurs (14), le circuit de microprocesseurs (14) étant conçu de telle façon qu'à partir d'une commande sélective de l'interrupteur (18) il mette en oeuvre un mode opératoire programmable suivant lequel le circuit de microprocesseurs (14) se trouve dans une configuration telle qu'il puisse recevoir les données fournies par le fonctionnement ultérieur de l'interrupteur (18).

2. Une carte électronique (10) comme réclamée dans la demande 1, **caractérisée par le fait que** le circuit de microprocesseurs (14) se trouve être un micro-contrôleur programmé de façon à détecter un nombre prédéterminé de fonctionnements de l'interrupteur (18) et passer à partir de là dans son mode opératoire programmable.

3. Une carte électronique comme réclamée dans la demande 1 ou 2, **caractérisée par le fait que** le circuit de microprocesseurs (14) contrôle la durée séparant les fonctionnements successifs de l'interrupteur (18) et, en fonction de cette durée, passe dans au moins l'un des différents modes opératoires.

4. Une carte électronique (10) comme réclamée dans la demande 3, **caractérisée par le fait que** le circuit de microprocesseurs (14) se trouve dans une configuration telle que l'information provenant d'une pluralité de champs de données se trouve précisée par le fonctionnement de l'interrupteur (18), le circuit de microprocesseurs (14) étant conçu de façon telle, qu'à la suite du fonctionnement de l'interrupteur (18) après un délai prédéterminé, un champ ultérieur de données soit alors exploré.

5. Une carte électronique (10) comme réclamée dans n'importe laquelle des demandes précédentes, **caractérisée par le fait que** des données binaires sont formulées par le fonctionnement sélectif de l'interrupteur (18) lorsqu'il se trouve en mode opérationnel programmable.

6. Une carte électronique (10) comme réclamée dans n'importe laquelle des demandes précédentes, **caractérisée par le fait que** le circuit de microprocesseurs (14), à partir de la commande de l'interrupteur (18) d'une façon prédéterminée, entre dans un mode opératoire suivant lequel la carte (10) assure une fonction de contrôle.

7. Une carte électronique (10) comme réclamée dans n'importe laquelle des demandes précédentes, **caractérisée par le fait que** le moyen de transmission (12) est un émetteur à modulation de fréquence conçu pour transmettre par intermittence les données numériques codées à l'appareil de lecture (38).

8. Une carte électronique (10) comme réclamée dans n'importe laquelle des demandes précédentes, **caractérisée par le fait qu'**il s'agit d'une carte active possédant sa propre source d'énergie (16) et qui se trouve scellée dans une capsule dont le corps est à base de résine.

9. Une méthode d'introduction des données dans une cane électronique (10) comprenant un circuit de microprocesseurs (14) connecté à un interrupteur à commande magnétique (18), la méthode étant **caractérisée par le fait qu'**elle comporte, qui produit de manière sélective un champ magnétique à proximité de l'interrupteur (18) ; et contrôlant la commande de l'interrupteur (18) par le circuit de microprocesseurs (14) et à la suite du fonctionnement de celui-ci, passant dans un mode opératoire programmable où le circuit de microprocesseurs (14) reçoit les données définies par le fonctionnement de l'interrupteur (18).

10. Une méthode comme réclamée dans la demande 9, **caractérisée par le fait que** la carte (10) est utilisable pour s'intégrer dans un mode opératoire suivant lequel la carte (10) assure une fonction de contrôle.
